# EUROPÄISCHE PATENTSCHRIFT

(11) **EP 3 912 937 B1**
(45) Veröffentlichungstag und Bekanntmachung des Hinweises auf die Patenterteilung: **17.12.2025**
(21) Anmeldenummer: 21174985.8
(22) Anmeldetag: 20.05.2021
(51) Int. Cl.: B65G 47/86, B67C 7/00, B65G 29/00

(54) **VORRICHTUNG ZUM VORGEBEN EINER KLAMMERARMPOSITION UND BEHÄLTERTRANSPORTVORRICHTUNG**
DEVICE FOR SPECIFYING A CLAMP POSITION AND A CONTAINER TRANSPORT DEVICE
DISPOSITIF DE DÉFINITION D'UNE POSITION DE BRAS DE PINCE ET DISPOSITIF DE TRANSPORT DE RÉCIPIENTS

(30) Priorität: 20.05.2020 DE 102020113600
(43) Veröffentlichungstag der Anmeldung: 24.11.2021
(73) Patentinhaber: KRONES AG, 93073 Neutraubling (DE)
(72) Erfinder: Landler, Bruno, 93073 Neutraubling (DE); Brandl, Christoph, 93073 Neutraubling (DE); Leidel, Marco, 93073 Neutraubling (DE)
(74) Vertreter: Nordmeyer, Philipp Werner

(56) Entgegenhaltungen:
- EP-A1- 1 970 329
- DE-A1- 4 131 699
- DE-U1- 29 507 933
- JP-A- 2000 072 245
- JP-A- H01 267 214
- US-A- 3 043 447

## Beschreibung

### Technisches Gebiet

Die vorliegende Erfindung betrifft eine Vorrichtung zum Vorgeben einer Klammerarmposition einer Klammer zum Halten eines Behälters in einer Behältertransportvorrichtung, sowie eine Behältertransportvorrichtung.

### Stand der Technik

Im Bereich von Getränkeabfüllanlagen ist es bekannt, Behälter mit Transportvorrichtungen durch die Getränkeabfüllanlage zu transportieren, wobei die Behälter entweder mit ihrem Behälterboden auf einer Bodentransporteinheit stehend transportiert, oder die Behälter durch Klammern, welche die Behälter beispielsweise an ihren Behälterhals oder ihren Behälterbauch greifen, durch die Getränkeabfüllanlage transportiert werden.

Hierbei wird zwischen aktiven Klammern und passiven Klammern unterschieden. Passive Klammern sind elastisch in eine vorgegebene Schließposition vorgespannt und werden durch das Einschieben eines Behälters in die Klammer elastisch verformt. Ist der Behälter in die Klammer eingeschoben, schließt sich die Klammer aufgrund der elastischen Vorspannung in Richtung Schließposition und die Klammerarme der Klammer halten den in der Klammer befindlichen Behälter. Bei passiven Klammern muss der Behälter gegen die aufgrund des Spreizens der Klammer entstehende Schließkraft der Greifarme bewegt werden. Hierdurch wird der Behälter beim Einschieben mit einer hohen Kraft beaufschlagt, so dass derartige Klammern zum Greifen beziehungsweise Halten fragiler und/oder leicht verformbarer sowie dünnwandiger Behälter nicht geeignet sind. Zumindest ist eine Neigung zum Verkratzen der Oberflächen der jeweiligen Behälter gegeben, so dass die Qualität der Behälter herabgesetzt sein kann.

Weiterhin bekannt sind aktive Klammern, bei welchen ein Öffnen und Schließen der Klammervorrichtung mittels eines Aktuators aktiv durchgeführt wird. Solche aktiven Klammern dienen insbesondere dazu, eine sichere und schonende Übernahme der jeweiligen Behälter von einer vorhergehenden Transportvorrichtung zu ermöglichen oder eine ebenso sichere und behälterschonende Übergabe der Behälter an eine nachfolgende Transportvorrichtung zu gewährleisten. Insbesondere kann durch das aktive Öffnen und Schließen der Klammer eine erhöhte Reibung an dem jeweiligen Behälter, welche beispielsweise zu einem Verkratzen des Behälters führen könnte, vermieden werden. Um die Komplexität einer aktiven Klammer zu reduzieren und gleichzeitig zu ermöglichen, dass die Klammerarme der Klammer in einem Grundzustand eine vorgegebene Position aufweisen, beispielsweise eine geschlossene Position, ist es bekannt, Mittel an der Klammer vorzusehen, welche auf die Klammerarme eine Vorspannung aufbringen, und so die Klammerarme in die vorgegebene Position vorzuspannen. Die Klammerarme der Klammer können durch betätigen einer Betätigungseinheit der Klammer aktiv aus der vorgespannten Position gebracht werden. Durch Betätigen der Betätigungseinheit werden die Klammerarme aktiv gespreizt. Bei herkömmlichen Transportvorrichtungen werden beispielsweise Nocken von unterhalb der Klammer angesteuert, wobei ein Verdrehen des Nockens ein Aufspreizen der Klammerarme bewirkt.

Alternativ ist es bekannt, die Betätigungseinheit mit einer Rolle oder einem Gleitelement zu versehen, welches auf einem Leitkurvenelement abrollen bzw. gleiten kann. Durch das Leitkurvenelement wird die Position des Betätigungselements bzw. Steuerelements vorgegeben. In der Regel befindet sich das Betätigungselement bzw. Steuerelement aufgrund der Vorspannung der Klammer in einer Position, welche einer geschlossenen Position der Klammer entspricht. Interagiert das Betätigungselement bzw. Steuerelement nun mit dem Leitkurvenelement, erfolgt in der Regel ein Verschieben des Steuerelements in eine vorgegebene Richtung, was ein Aufspreizen der Klammerarme bewirkt.

Das Leitkurvenelement ist hierbei an einem starr am Boden fixierten Grundgestell befestigt. Die Klammern mit ihren Steuerelementen hingegen sind an einer relativ zum Grundgestell beweglichen Transporteinheit befestigt. Kommt eine Klammer in den Bereich des Leitkurvenelementes, so interagiert das Steuerelement der Klammer mit dem Leitkurvenelement derart, dass die Klammer geöffnet wird und ein zu transportierender Behälter aus der Klammer entnommen oder in die Klammer übergeben werden kann.

Das Leitkurvenelement ist hierbei derart auszugestalten, dass die Klammer aus der geschlossenen Position so weit auf gespreizt wird, dass ein Einführen und Entnehmen des größten zu transportierenden Behältertyps möglich ist. Wird ein kleinerer Behältertyp behandelt bzw. transportiert, so wird die Klammer weiter geöffnet, als für ein Einführen oder Entnehmen des kleineren Behältertypen notwendig. Die Klammer erfährt dadurch einen unnötig großen Verschleiß.

Zudem kann es insbesondere bei Transportvorrichtungen in Rundläuferbauweise bei dem Transport von Behältern mit unterschiedlichen Behälterdurchmessern zu Mitten- und/oder Schleppfehlern des Transportsternes kommen, da die Klammer und der Transportstern auf einen Behältertyp eingestellt werden. Für alle anderen zu transportierenden Behältertypen ist die Einstellung mithin nicht ideal.

Die DE 295 07 933 U1 beschreibt einen Transportstern mit Greifzangen, in die mehrere vorgegebene Schließpositionen integriert sind. Die EP 1 970 329 A1 beschreibt eine Transportvorrichtung für Behälter mit einem verstellbaren Nockenelement. Weitere Behältertransportvorrichtungen gehen aus der JP H01 267214 A, JP 2000 072245, welche die Merkmale des Oberbegriffs des Anspruchs 1 offenbart, und US 3,043,447 A hervor.

### Darstellung der Erfindung

Ausgehend von dem bekannten Stand der Technik ist es eine Aufgabe der vorliegenden Erfindung, eine verbesserte Behältertransportvorrichtung mit einer Vorrichtung zum Vorgeben einer Klammerarmposition einer Klammer zum Halten eines Behälters bereitzustellen.

Die Aufgabe wird durch eine Behältertransportvorrichtung , gemäß Anspruch 1, mit einer Vorrichtung zum Vorgeben einer Klammerarmposition einer Klammer zum Halten eines Behälters in einer Behältertransportvorrichtung mit den Merkmalen des Anspruchs 1 gelöst. Vorteilhafte Weiterbildungen ergeben sich aus den Unteransprüchen, der Beschreibung und den Figuren.

Die Vorrichtung zum Vorgeben einer Klammerarmposition einer Klammer zum Halten eines Behälters in der Behältertransportvorrichtung umfasst ein Leitkurvenelement zum Vorgeben einer Position eines Steuerelements zum Steuern der Klammerarmposition einer Klammer und eine Befestigungseinheit zum Befestigen des Leitkurvenelements an einem Grundgestell einer Behältertransportvorrichtung. Das Leitkurvenelement ist ferner in einer Verstellrichtung relativ zur Befestigungseinheit beweglich ausgebildet.

Dadurch, dass das Leitkurvenelement in einer Verstellrichtung relativ zur Befestigungseinheit beweglich ausgebildet ist, kann ein durch das Leitkurvenelement auf das Steuerelement aufgebrachter Hub des Steuerelements verstellt werden. Durch die Veränderung des Hubes des Steuerelementes verändert sich entsprechend auch die durch den Hub des Steuerelements in der Klammer erzeugte Aufweitung der Klammerarme.

Zum Transportieren eines ersten Behältertyps kann das Leitkurvenelement relativ zur Befestigungseinheit in Verstellrichtung in eine erste vorgegebene Position gebracht werden, welche über eine Interaktion mit dem Steuerelement ein Aufweiten der Klammer bewirkt, derart bemessen, dass die Klammer so weit geöffnet wird, wie für ein Einführen oder Entnehmen des ersten Behältertypen erforderlich ist, ohne jedoch ein unnötig großes Aufweiten der Klammer zu erzeugen.

Soll die Behältertransportvorrichtung nun anstelle des ersten Behältertyps einen von diesem verschiedenen Behältertyp transportieren, so kann das Leitkurvenelement relativ zur Befestigungseinheit in Verstellrichtung versetzt werden, sodass die Klammer so weit geöffnet wird, wie es für ein Einführen oder Entnehmen des anderen Behältertyps erforderlich ist, ohne dass die Klammer unnötig ausgeweitet wird.

Entsprechend kann die Aufweitung der Klammer bzw. von deren Klammerarmen auf die jeweilige Größe des zu transportierenden Behälters angepasst werden. Hierdurch kann ein unnötig großes Aufweiten der Klammer vermieden werden, was einen geringeren Verschleiß der Klammer zur Folge hat.

Die Verstellrichtung ist derart ausgerichtet und die Vorrichtung ist so eingerichtet, dass durch ein Verstellen des Leitkurvenelements relativ zur Befestigungseinheit ein durch das Leitkurvenelement auf das Steuerelement vorgegebener maximaler Hub verstellt wird.

Eine mit einer derartigen Vorrichtung versehenen Behältertransportvorrichtung kann im Vergleich zu herkömmlichen Behältertransportvorrichtungen eine längere Standzeit aufweisen, da die Klammern länger im Einsatz sein können, bevor ein Austausch notwendig wird.

Gemäß einer bevorzugten Ausführungsform ist eine Führungseinheit zum Führen des Leitkurvenelements an der Befestigungseinheit angeordnet, wobei die Führungseinheit bevorzugt eine Linearführung umfasst. Durch die Führungseinheit kann die Verstellrichtung exakt vorgegeben werden.

Gemäß einer weiteren bevorzugten Ausführungsform ist eine Einstelleinrichtung zum Einstellen der Position des Leitkurvenelements relativ zur Befestigungseinheit vorgesehen. Dadurch kann die Position des Leitkurvenelements relativ zur Befestigungseinheit exakt vorgegeben werden.

Vorzugsweise umfasst die Einstelleinrichtung einen Spindeltrieb, wobei ein Schlitten des Spindelbetriebs mit einer Spindel des Spindelbetriebs derart in Eingriff steht, dass eine Rotation der Spindel ein Verschieben des Schlittens in Verstellrichtung bewirkt.

Gemäß einer weiteren bevorzugten Ausführungsform umfasst die Einstelleinrichtung eine Antriebseinheit, bevorzugt eine von manuell betätigbare Antriebseinheit, besonders bevorzugt eine von Hand betätigbare Kurbel oder ein von Hand betätigbares Stellrad.

Alternativ oder zusätzlich kann die Einstelleinrichtung auch eine Antriebseinheit in Form eines automatischen Antriebs umfassen, bevorzugt einen Elektromotor, wobei bevorzugt der automatische Antrieb mit einer Steuerung/Regelung zum Steuern/Regeln des automatischen Antriebs verbunden ist.

Um den an der Behältertransportvorrichtung zur Verfügung stehenden Bauraum bestmöglich nutzen zu können, kann die Einstelleinrichtung eine Umlenkeinheit zum Umlenken einer Drehachse umfassen, wobei die Umlenkeinheit bevorzugt zwischen der Spindel und der Antriebseinheit angeordnet ist, wobei die Umlenkeinheit vorzugsweise ein Kegelradgetriebe oder ein Kardangelenk umfasst.

Die Behältertransportvorrichtung gemäß der Erfindung umfasst ein Grundgestell und eine relativ zum Grundgestell bewegbare, zumindest eine Klammer zum Halten eines Behälters aufweisende Transporteinheit. Die Behältertransportvorrichtung kennzeichnet sich dadurch, dass das Grundgestell zumindest eine Vorrichtung gemäß einem der vorstehenden Ausführungsformen umfasst.

Dadurch, dass die Behältertransportvorrichtung zumindest eine Vorrichtung gemäß einem der vorstehenden Ausführungsformen umfasst, können die hinsichtlich der Vorrichtung beschriebenen Vorteile und Wirkungen analog auch durch die Behältertransportvorrichtung erzielt werden.

Die Transporteinheit ist um eine Drehachse drehbar, wobei die Verstellrichtung radial zur Drehachse ausgerichtet ist. Mit anderen Worten ist die Transporteinheit in Rundläuferbauweise ausgebildet, vorzugsweise in Form eines Karussells bzw. Transportsterns.

Alternativ weist die Transporteinheit eine lineare Transportrichtung auf, wobei die Verstellrichtung quer zur Transportrichtung, bevorzugt orthogonal zur Transportrichtung ausgerichtet ist.

### Kurze Beschreibung der Figuren

Bevorzugte weitere Ausführungsformen der Erfindung werden durch die nachfolgende Beschreibung der Figuren näher erläutert. Dabei zeigen:
Figur 1 schematisch eine perspektivische Seitenansicht einer Vorrichtung zum Vorgeben einer Klammerarmposition;
Figur 2 schematisch eine Seitenansicht der Vorrichtung aus Figur 1;
Figur 3 schematisch eine Schnittansicht durch die Vorrichtung aus Figur 1;
Figur 4 schematisch eine weitere perspektivische Seitenansicht der Vorrichtung aus Figur 1;
Figur 5 schematisch eine perspektivische Seitenansicht einer Behältertransportvorrichtung;
Figur 6 schematisch eine Seitenansicht der Behältertransportvorrichtung aus Figur 5;
Figur 7 schematisch eine Ansicht von unten der Behältertransportvorrichtung aus Figur 5; und
Figur 8 schematisch eine Draufsicht einer weiteren Behältertransportvorrichtung.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

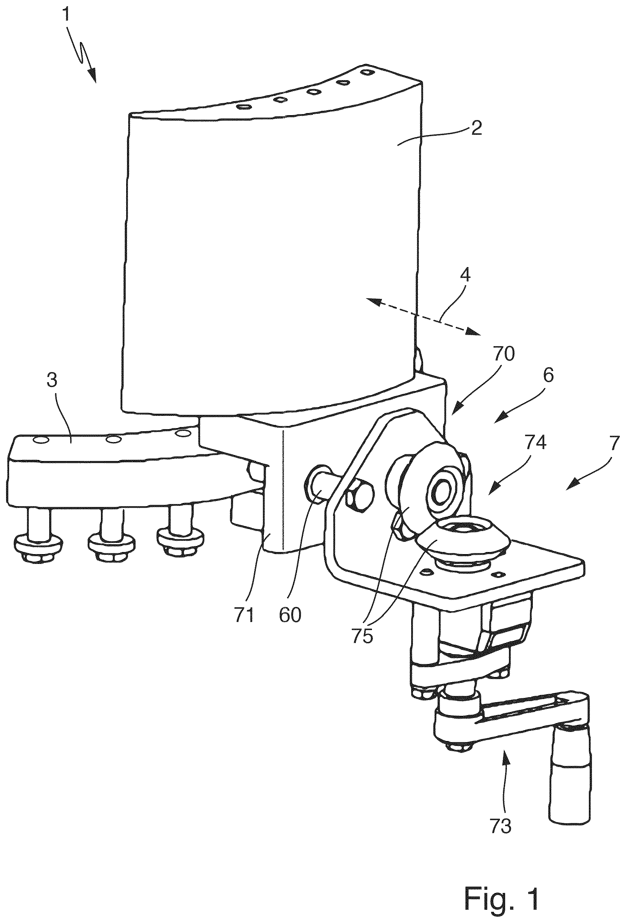

In Figur 1 ist schematisch eine perspektivische Seitenansicht einer Vorrichtung 1 zum Vorgeben einer Klammerarmposition einer Klammer (nicht gezeigt) zum Halten eines Behälters in einer Behältertransportvorrichtung gezeigt. Die Vorrichtung 1 umfasst ein Leitkurvenelement 2 zum vorgeben der Position eines Steuerelements der Klammer, welche die Klammerarmposition der Klammer steuert. Sie umfasst ferner eine Befestigungseinheit 3 zum Befestigen des Leitkurvenelements 2 an einem Grundgestell einer Behältertransportvorrichtung. Das Leitkurvenelement 2 ist in einer Verstellrichtung 4 relativ zur Befestigungseinheit 3 beweglich ausgebildet.

Zum Bereitstellen der Verstellbarkeit des Leitkurvenelements 2 relativ zur Befestigungseinheit 3 ist das Leitkurvenelement 2 über eine Führungseinheit 6, welche vorliegend zwei Linearführungen 6 umfasst, in der durch die Linearführungen 6 vorgegebenen Verstellrichtung 4 gegenüber der Befestigungseinheit 3 verschiebbar.

Um die Position des Leitkurvenelements 2 relativ zur Befestigungseinheit 3 vorgeben zu können, ist zwischen der Befestigungseinheit 3 und dem Leitkurvenelement 2 eine Einstelleinrichtung 7 angeordnet. Gemäß dieser Ausführungsform umfasst die Einstelleinrichtung 7 einen Spindeltrieb 70. Der Spindeltrieb 70 umfasst einen Schlitten 71, welcher an den Linearführungen 60 geführt ist, und an welchem das Leitkurvenelement befestigt ist. Eine hier verdeckte Spindel des Spindelbetriebs 70 ist über eine Umlenkeinheit 74, welche vorliegend ein Kegelradgetriebe umfasst, das durch zwei Kegelräder 75 ausgebildet ist, mit einer Antriebseinheit in Form einer von Hand betätigtbaren Kurbel 73 verbunden ist. Durch ein Drehen der Kurbel 73 erfährt die Spindel des Spindeltriebes 70 eine Drehung, welche diese auf den mit der Spindel in Eingriff stehenden Schlitten 71 überträgt. Aufgrund der Führung durch die Linearführungen 60 erfährt der Schlitten 71 einen Versatz in Verstellrichtung 4.

Alternativ könnte die Einstelleinrichtung auch eine anders ausgebildete Antriebseinheit umfassen, beispielsweise einen automatischen Antrieb mit einem Elektromotor.

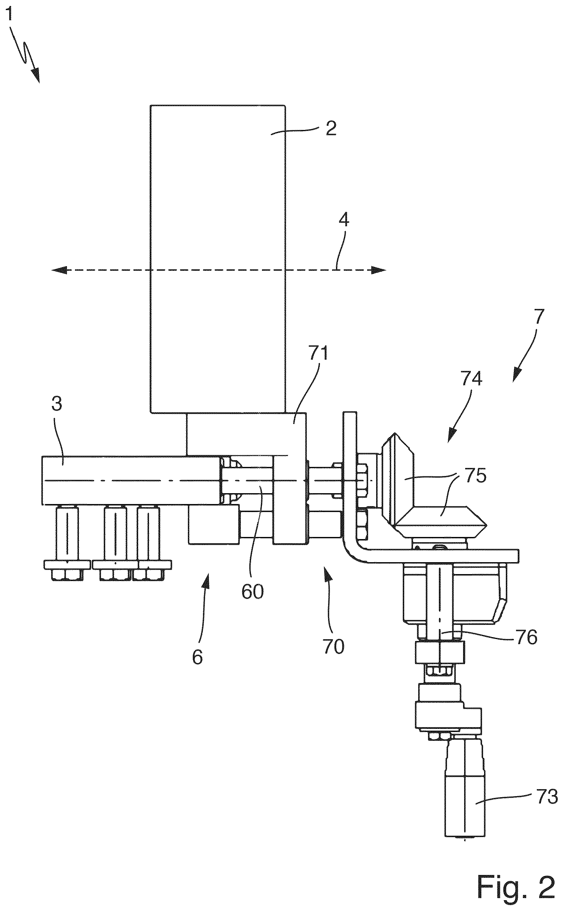

Figur 2 zeigt schematisch eine Seitenansicht der Vorrichtung 1 aus Figur 1. Gut zu erkennen ist hier, dass sich das Leitkurvenelement 2 oberhalb der Befestigungseinheit 3, sowie der Einstelleinrichtung 7 samt Führungseinheit 6 erstreckt. Die durch die Umlenkeinheit 74 mit dem Spindeltrieb 70 verbundene Kurbel 73 weist eine Drehachse 76 auf, welche im rechten Winkel zur Verstellrichtung 4 orientiert ist.

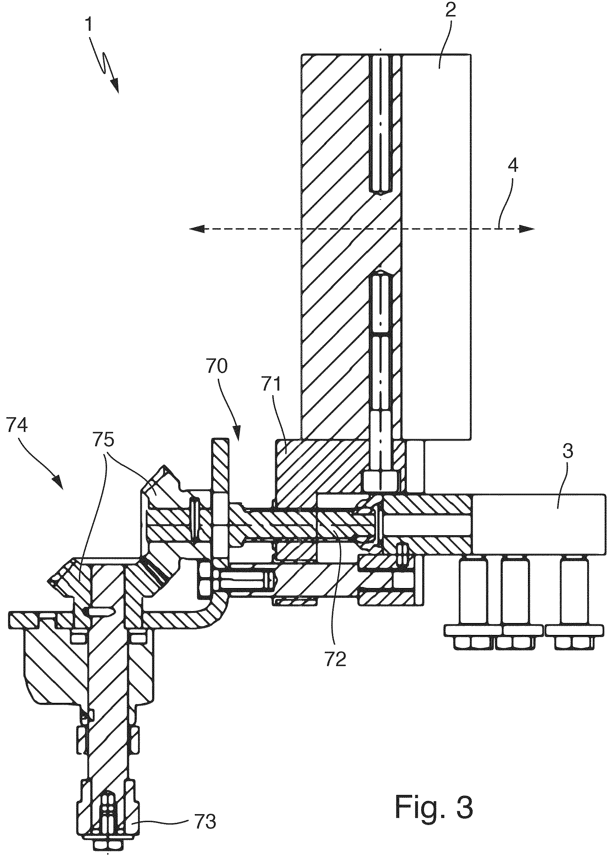

Aus Figur 3 ist schematisch eine Schnittansicht durch die Vorrichtung 1 aus Figur 1 zu entnehmen, in welcher die Funktionsweise des Spindeltriebs 70, insbesondere die Spindel 72, zu erkennen ist.

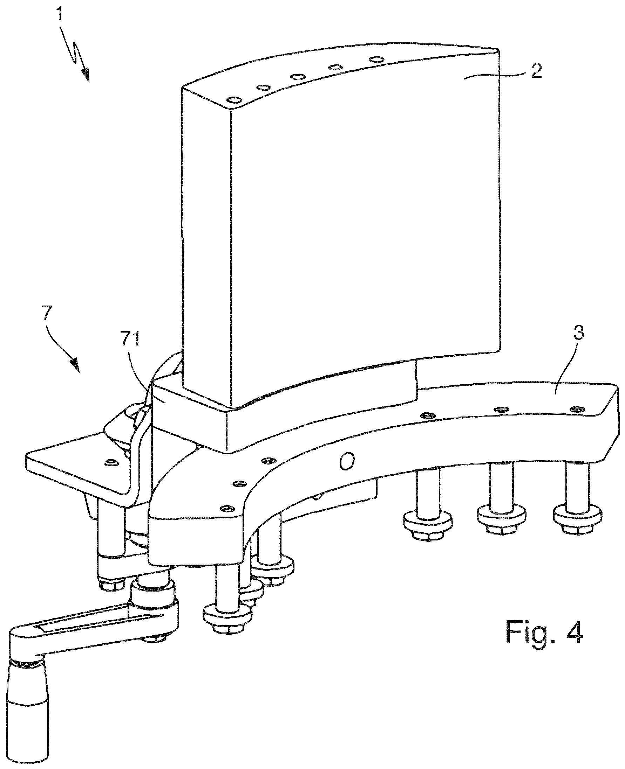

Figur 4 zeigt schematisch eine weitere perspektivische Seitenansicht der Vorrichtung 1 aus Figur 1. aus dieser Ansicht wird deutlich, dass die Befestigungseinheit 3 ein Kreisbogensegment darstellt.

Dadurch kann die Befestigungseinheit 3 in ihrer Form passend auf eine Transportvorrichtung in Rundläuferbauweise, bei welcher die Transporteinheit ein Transportstern ist, gesetzt werden.

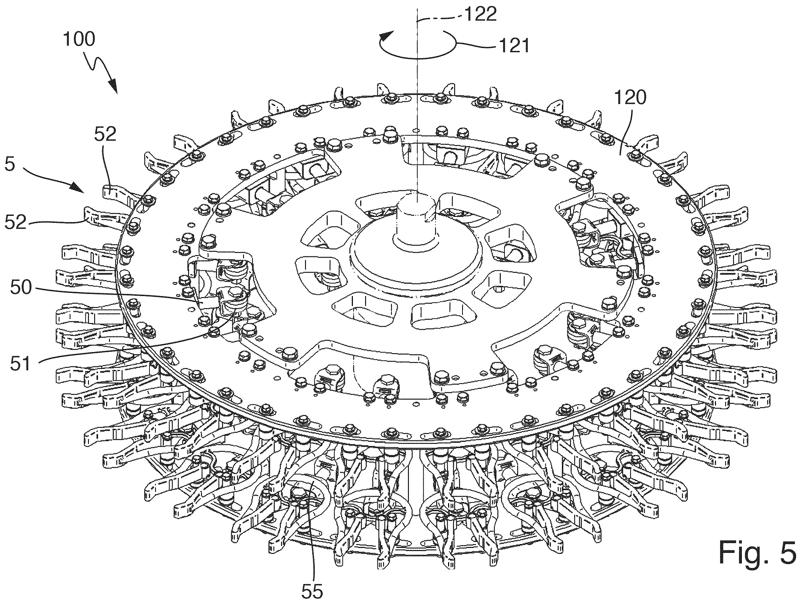

In Figur 5 ist schematisch eine perspektivische Seitenansicht einer Behältertransportvorrichtung 100 gezeigt. Die Behältertransportrichtung 100 umfasst ein hier nicht gezeigtes Grundgestell und eine relativ zu diesem um eine Drehachse 122 drehbare Transporteinheit 120. Mit dem Bezugszeichen 121 ist die Transportrichtung der Transporteinheit 120 angedeutet. Die Behältertransportrichtung 100 umfasst ferner eine Vorrichtung 1 gemäß den Figuren 1 bis 4, welche in der vorliegenden Abbildung durch die Transporteinheit 120 verdeckt ist.

An der Transporteinheit 120 ist eine Vielzahl von in Bezug auf die Drehachse 122 nach radial außen orientierten Klammern 5 angeordnet, welche jeweils zwei aufeinander zu und voneinander weg bewegbare Klammerarme 52 umfassen. Die Klammerarme 52 einer Klammer 5 sind durch einen Federbügel 55 in eine geschlossene Position vorgespannt.

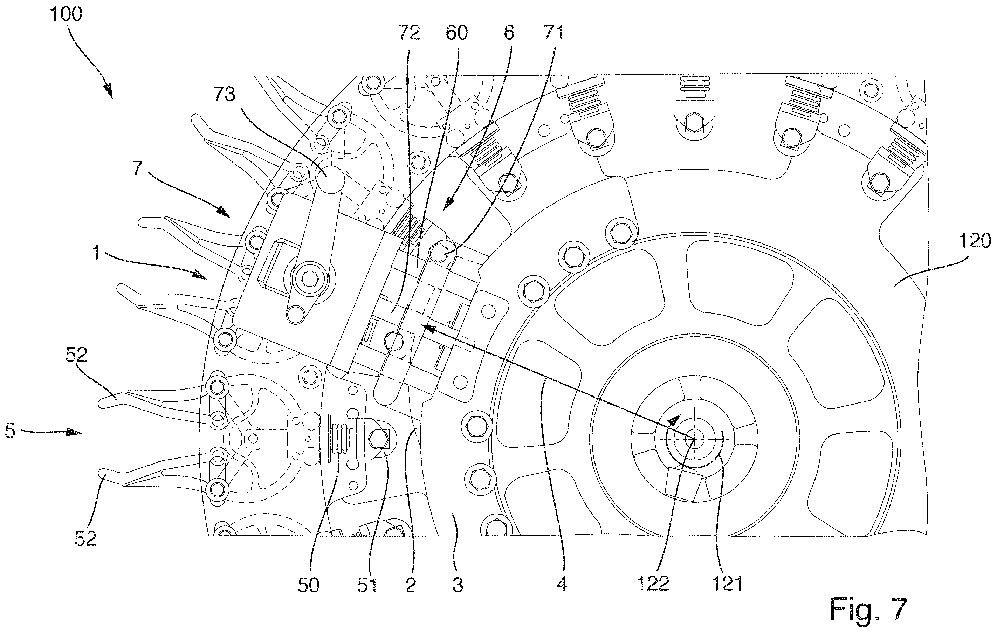

Die Klammern 5 weisen ferner jeweils ein Steuerelement 5 auf, mittels welchem die Position der Klammerarme 52 steuerbar ist. Am radial inneren Ende der Steuerelemente 5 weisen diese jeweils eine Rolle 51 auf, welche mit dem Leitkurvenelement 2 interagieren kann, derart, dass sie auf dem Leitkurvenelement abrollt, wenn sie in Bezug auf die Drehachse 122 in Umfangsrichtung gesehen auf Höhe der Vorrichtung 1 bewegt wird, wie in Bezug auf Figur 7 näher erläutert.

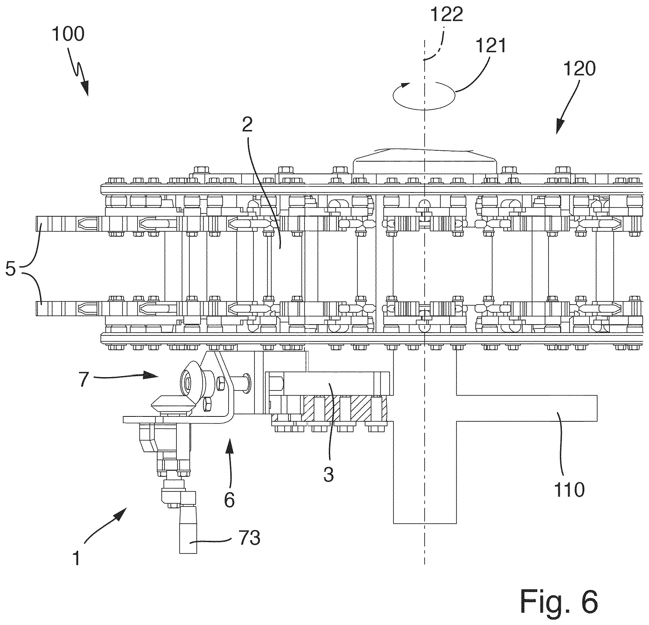

Figur 6 zeigt schematisch eine Seitenansicht der Behältertransportvorrichtung 100 aus Figur 5. das Leitkurvenelement 2 der Vorrichtung 1 erstreckt sich auf Höhe der Klammern 5, sodass die Rollen 51 der Klammern 5 mit dem Leitkurvenelement 2 interagieren können.

Der restliche Teil der Vorrichtung 1 ist im Wesentlichen unterhalb der Transporteinheit 120 angeordnet. Ferner ist in Figur 6 das Grundgestell 110 zu erkennen, an welchem die Vorrichtung 1 über die Befestigungseinheit 3 befestigt ist. Dadurch kann das Leitkurvenelement 2 relativ zum Grundgestell 110 und somit auch relativ zur Transporteinheit 120 und der daran befestigten Klammern 5 verstellt werden.

Figur 7 ist schematisch eine Ansicht von unten der Behältertransportvorrichtung 100 aus Figur 5 zu entnehmen. Die Verstellrichtung 4 erstreckt sich mit Bezug auf die Drehachse 122 in radialer Richtung. Da die Rollen 52 in Bezug auf die Drehachse 122 auf einem konstanten Teilkreis angeordnet sind, kann durch Verstellen der Position des Leitkurvenelement 2 in Verstellrichtung 3 ein beim Abrollen der Rollen 52 auf dem Leitkurvenelement 2 auf das Steuerelement 5 in radialer Richtung erzeugter Hub verändert werden. Je näher das Leitkurvenelement 2 an die Drehachse 122 verschoben wird, desto geringer ist der dadurch erzeugte Hub der Steuerelemente 50 der Klammern 5. Je kleiner der Hub der Steuerelemente 50 in radialer Richtung, desto geringer fällt das Aufspreizen der Klammerarme 52 aus.

Mit anderen Worten ist die Verstellrichtung 4 derart ausgerichtet, dass durch ein Verstellen des Leitkurvenelements 2 relativ zur Befestigungseinheit 3 ein durch das Leitkurvenelement 2 auf das Steuerelement 50 vorgegebener maximaler Hub verstellbar ist.

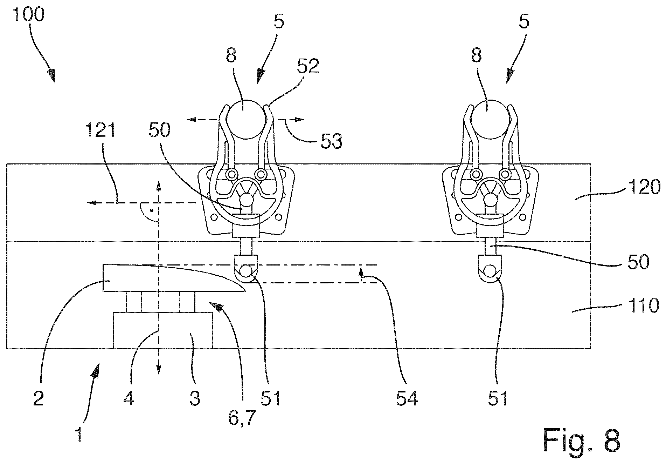

In Figur 8 ist schematisch eine Draufsicht einer Behältertransportvorrichtung 100 gemäß einer weiteren Ausführungsform gezeigt. Die Behältertransportvorrichtung 100 umfasst wiederum ein Grundgestell 110 und eine relativ zum Grundgestell bewegbare Transporteinheit 120, welche eine lineare Transportrichtung 121 aufweist. Die Transporteinheit 120 kann beispielsweise eine Förderkette oder ein Förderband aufweisen. Die Transporteinheit 120 umfasst eine Mehrzahl von Klammern 5, welche im Wesentlichen den Klammern der Behältertransportrichtung 100 gemäß den Figuren 5 bis 7 entspricht.

An dem Grundgestell 110 ist über eine Befestigungseinheit 3 eine Vorrichtung 1 zum Vorgeben der Klammerarmposition der Klammern 5 zum Halten eines Behälters 8 gemäß einer weiteren Ausführungsform befestigt. Die Vorrichtung 1 umfasst analog zur vorbeschriebenen Vorrichtung 1 gemäß der Figuren 1 bis 7 ein Leitkurvenelement 2, welches relativ zur Befestigungseinheit 3 in einer Verstellrichtung 4 verstellbar ist. Vorliegend ist die Verstellrichtung 4 orthogonal zur linearen Transportrichtung 121 orientiert.

Die Vorrichtung 1 umfasst eine Führungseinheit 6 und eine Einstelleinrichtung 7, wobei letztere eine einen automatischen Antrieb umfassende Antriebseinheit (nicht gezeigt) umfasst. Der automatische Antrieb ist mit einer nicht gezeigten Steuerung/Regelung verbunden. So kann die Position des Leitkurvenelement 2 verstellt werden, ohne dass eine Person in den Bereich der Behältertransportrichtung 100 gelangen muss.

Wird eine Klammer 5 in Transportrichtung 121 in den Bereich der Vorrichtung 1 transportiert, so tritt die Rolle 51 der Klammer 5 in Interaktion mit dem Leitkurvenelement 2, indem die Rolle 51 über das Leitkurvenelement 2 abrollt.

Da sich das Leitkurvenelement 2 in einer festen Position befindet, erfährt das mit den klammerarmen 52 verbundene Steuerelement 50 eine Verschiebung in Verstellrichtung 4 derart, dass die Klammerarme 52 in einer Aufspreizrichtung 53 auf gespreizt werden. Dies hat zur Folge, dass die Klammer 5 sich öffnet und den darin gehaltenen Behälter 8 freigibt, sodass dieser aus dem Bereich der Klammer 5 entnommen werden kann.

Mit dem Bezugszeichen 54 ist ein durch das Leitkurvenelement 2 in seiner derzeitigen Position auf das Steuerelement 50 erzwungener Hub angedeutet. Die Höhe des Hubes 54 gibt die Größe der Aufspreizung der Klammerarme 52 vor.

Die Größe bzw. Höhe des Hubes 54 kann dadurch verstellt werden, dass die Position des Leitkurvenelements 2 in Verstellrichtung 4 verstellt wird. Wird das Leitkurvenelement 2 in Richtung auf die Befestigungseinheit 3 verschoben, so ist der sich einstellende Hub gegenüber dem in Figur 8 gezeigten Hub 54 verringert. Entsprechend ist auch die Aufweitung bzw. Aufspreizung der Klammerarme 52 kleiner. Wird das Leitkurvenelement 2 von der Befestigungseinheit 3 weg bewegt, so ist der sich einstellende Hub 54 des Steuerelements 50 und somit die Aufweitung bzw. Aufspreizung der Klammerarme 52 größer als bei der in Figur 8 dargestellten Konfiguration.

### Bezugszeichenliste

- 1: Vorrichtung
- 2: Leitkurvenelement
- 3: Befestigungseinheit
- 4: Verstellrichtung
- 40: Radius
- 5: Klammer
- 50: Steuerelement
- 51: Rolle
- 52: Klammerarm
- 53: Aufspreizrichtung
- 54: Hub
- 55: Federbügel
- 6: Führungseinheit
- 60: Linearführung
- 7: Einstelleinrichtung
- 70: Spindeltrieb
- 71: Schlitten
- 72: Spindel
- 73: Kurbel
- 74: Umlenkeinheit
- 75: Kegelrad
- 76: Drehachse
- 8: Behälter
- 100: Behältertransportvorrichtung
- 110: Grundgestell
- 120: Transporteinheit
- 121: Transportrichtung
- 122: Drehachse

## Patentansprüche

1. Behältertransportvorrichtung (100), umfassend ein Grundgestell (110) und eine relativ zum Grundgestell (110) bewegbare, zumindest eine Klammer (5) zum Halten eines Behälters (8) aufweisende Transporteinheit (120), wobei das Grundgestell (110) aufweist:
eine Vorrichtung (1) zum Vorgeben einer Klammerarmposition der Klammer (5), umfassend ein Leitkurvenelement (2) zum Vorgeben einer Position eines Steuerelements (50) zum Steuern der Klammerarmposition der Klammer (5) und eine Befestigungseinheit (3) zum Befestigen des Leitkurvenelements (2) am Grundgestell (110), wobei das Leitkurvenelement (2) in einer Verstellrichtung (4) relativ zur Befestigungseinheit (3) beweglich ausgebildet ist,
**dadurch gekennzeichnet, dass** die Verstellrichtung (4) derart ausgerichtet und die Vorrichtung (1) so eingerichtet ist, dass durch ein Verstellen des Leitkurvenelements (2) relativ zur Befestigungseinheit (3) ein durch das Leitkurvenelement (2) auf das Steuerelement (50) vorgegebener maximaler Hub (54) verstellt wird, so dass die Aufweitung der Klammer (5) auf die jeweilige Größe des zu transportierenden Behälters (8) angepasst wird, und
die Transporteinheit (120) um eine Drehachse (122) drehbar ist, wobei die Verstellrichtung (4) radial zur Drehachse (122) ausgerichtet ist, oder
die Transporteinheit eine lineare Transportrichtung (121) aufweist, wobei die Verstellrichtung (4) quer zur Transportrichtung (121) ausgerichtet ist.

2. Behältertransportvorrichtung (100) gemäß Anspruch 1, **dadurch gekennzeichnet, dass** eine Führungseinheit (6) zum Führen des Leitkurvenelements (2) an der Befestigungseinheit (3) angeordnet ist, wobei die Führungseinheit (6) bevorzugt eine Linearführung (60) umfasst.

3. Behältertransportvorrichtung (100) gemäß einem der vorstehenden Ansprüche, **dadurch gekennzeichnet, dass** eine Einstelleinrichtung (7) zum Einstellen der Position des Leitkurvenelements (2) relativ zur Befestigungseinheit (3) vorgesehen ist, wobei bevorzugt die Einstelleinrichtung (7) einen Spindeltrieb (70) umfasst, wobei ein Schlitten (71) des Spindelbetriebs (70) mit einer Spindel (72) des Spindelbetriebs (70) derart in Eingriff steht, dass eine Rotation der Spindel (72) ein Verschieben des Schlittens (71) in Verstellrichtung (4) bewirkt.

4. Behältertransportvorrichtung (100) gemäß dem vorstehenden Anspruch, **dadurch gekennzeichnet, dass** die Einstelleinrichtung (7) eine Antriebseinheit umfasst, bevorzugt eine von manuell betätigbare Antriebseinheit, besonders bevorzugt eine von Hand betätigtbare Kurbel (73) oder ein von Hand betätigtbares Stellrad, und/oder einen automatischen Antrieb, besonders bevorzugt einen Elektromotor, umfasst, wobei bevorzugt der automatische Antrieb mit einer eine Steuerung/Regelung zum Steuern/Regeln des automatischen Antriebs verbunden ist.

5. Behältertransportvorrichtung (100) gemäß Anspruch 4, **dadurch gekennzeichnet, dass** die Einstelleinrichtung (7) eine Umlenkeinheit (74) zum Umlenken einer Drehachse (76) umfasst, wobei die Umlenkeinheit (74) bevorzugt zwischen der Spindel (72) und der Antriebseinheit angeordnet ist, wobei die Umlenkeinheit (74) bevorzugt ein Kegelradgetriebe oder ein Kardangelenk umfasst.

6. Behältertransportvorrichtung (100) gemäß einem der vorstehenden Ansprüche, **dadurch gekennzeichnet, dass** die die Verstellrichtung (4) orthogonal zur linearen Transportrichtung (121) ausgerichtet ist.

## Claims

1. Container transport apparatus (100), comprising a base frame (110) and a transport unit (120) which is movable relative to the base frame (110) and has at least one clamp (5) for holding a container (8), the base frame (110) comprising:
an apparatus (1) for predefining a clamp arm position of the clamp (5), comprising a guide curve element (2) for predefining a position of a control element (50) for controlling the clamp arm position of the clamp (5) and a fastening unit (3) for fastening the guide curve element (2) to the base frame (110),
the guide curve element (2) being designed to be movable in an adjustment direction (4) relative to the fastening unit (3),
**characterized in that**
the adjustment direction (4) is oriented in such a way and the apparatus (1) is configured such that, by adjusting the guide curve element (2) relative to the fastening unit (3), a maximum stroke (54) predefined by the guide curve element (2) on the control element (50) is adjusted, with the result that the widening of the clamp (5) is adapted to the respective size of the container (8) to be transported, and
the transport unit (120) is rotatable about an axis of rotation (122), the adjustment direction (4) being oriented radially with respect to the axis of rotation (122), or
the transport unit has a linear transport direction (121), the adjustment direction (4) being oriented transversely with respect to the transport direction (121).

2. Container transport apparatus (100) according to claim 1, **characterized in that** a guide unit (6) for guiding the guide curve element (2) is arranged on the fastening unit (3), the guide unit (6) preferably comprising a linear guide (60).

3. Container transport apparatus (100) according to one of the preceding claims, **characterized in that** an adjustment device (7) for adjusting the position of the guide curve element (2) relative to the fastening unit (3) is provided, the adjustment device (7) preferably comprising a spindle drive (70), a carriage (71) of the spindle drive (70) being in engagement with a spindle (72) of the spindle drive (70) in such a way that a rotation of the spindle (72) brings about a displacement of the carriage (71) in the adjustment direction (4).

4. Container transport apparatus (100) according to the preceding claim, **characterized in that** the adjustment device (7) comprises a drive unit, preferably a drive unit which can be actuated manually, particularly preferably a crank (73) which can be actuated manually or an adjusting wheel which can be actuated manually, and/or an automatic drive, particularly preferably an electric motor, the automatic drive preferably being connected to an open-loop/closed-loop control for open-loop/closed-loop control of the automatic drive.

5. Container transport apparatus (100) according to claim 4, **characterized in that** the adjustment device (7) comprises a deflection unit (74) for deflecting an axis of rotation (76), the deflection unit (74) preferably being arranged between the spindle (72) and the drive unit, the deflection unit (74) preferably comprising a bevel gear mechanism or a cardan joint.

6. Container transport apparatus (100) according to one of the preceding claims, **characterized in that** the adjustment direction (4) is oriented orthogonally with respect to the linear transport direction (121).

## Revendications

1. Dispositif de transport de récipients (100), comprenant un châssis de base (110) et une unité de transport (120) mobile par rapport au châssis de base (110), présentant au moins une pince (5) pour maintenir un récipient (8), le châssis de base (110) présentant :
un dispositif (1) pour prédéfinir une position de bras de pince de la pince (5), comprenant un élément de came de guidage (2) pour prédéfinir une position d'un élément de commande (50) pour commander la position de bras de pince de la pince (5) et une unité de fixation (3) pour fixer l'élément de came de guidage (2) au châssis de base (110),
l'élément de came de guidage (2) étant réalisé de manière mobile dans une direction de réglage (4) par rapport à l'unité de fixation (3),
**caractérisé en ce que**
la direction de réglage (4) est orientée de telle sorte et le dispositif (1) est configuré de telle sorte qu'un déplacement de l'élément de came de guidage (2) par rapport à l'unité de fixation (3) permet de régler une course maximale (54) prédéfinie par l'élément de came de guidage (2) sur l'élément de commande (50), de telle sorte que l'élargissement de la pince (5) soit adapté à la taille respective du récipient (8) à transporter, et
l'unité de transport (120) peut tourner autour d'un axe de rotation (122), la direction de réglage (4) étant orientée radialement par rapport à l'axe de rotation (122), ou
l'unité de transport présente une direction de transport linéaire (121), la direction de réglage (4) étant orientée transversalement à la direction de transport (121).

2. Dispositif de transport de récipients (100) selon la revendication 1, **caractérisé en ce qu'**une unité de guidage (6) pour guider l'élément de came de guidage (2) est disposée au niveau de l'unité de fixation (3), l'unité de guidage (6) comprenant de préférence un guidage linéaire (60).

3. Dispositif de transport de récipients (100) selon l'une quelconque des revendications précédentes, **caractérisé en ce qu'**un dispositif de réglage (7) est prévu pour régler la position de l'élément de came de guidage (2) par rapport à l'unité de fixation (3), le dispositif de réglage (7) comprenant de préférence un entraînement à broche (70), un chariot (71) de l'entraînement à broche (70) étant en prise avec une broche (72) de l'entraînement à broche (70) de telle sorte qu'une rotation de la broche (72) provoque un déplacement du chariot (71) dans la direction de réglage (4).

4. Dispositif de transport de récipients (100) selon la revendication précédente, **caractérisé en ce que** le dispositif de réglage (7) comprend une unité d'entraînement, de préférence une unité d'entraînement pouvant être actionnée manuellement, de manière particulièrement préférée une manivelle (73) pouvant être actionnée manuellement ou une roue de réglage pouvant être actionnée manuellement, et/ou un entraînement automatique, de manière particulièrement préférée un moteur électrique, l'entraînement automatique étant de préférence connecté à une commande/régulation pour commander/réguler l'entraînement automatique.

5. Dispositif de transport de récipients (100) selon la revendication 4, **caractérisé en ce que** le dispositif de réglage (7) comprend une unité de déviation (74) pour dévier un axe de rotation (76), l'unité de déviation (74) étant de préférence disposée entre la broche (72) et l'unité d'entraînement, l'unité de déviation (74) comprenant de préférence un engrenage conique ou une articulation à cardan.

6. Dispositif de transport de récipients (100) selon l'une quelconque des revendications précédentes, **caractérisé en ce que** la direction de réglage (4) est orientée orthogonalement à la direction de transport linéaire (121).
